# EUROPÄISCHE PATENTSCHRIFT

(11) **EP 0 813 482 B1**
(45) Veröffentlichungstag und Bekanntmachung des Hinweises auf die Patenterteilung: **09.06.1999**
(21) Anmeldenummer: 96905842.9
(22) Anmeldetag: 01.03.1996
(51) Int. Cl.: B62D 15/02

(54) **LENKWINKEL-SENSOREINRICHTUNG FÜR KRAFTFAHRZEUGE**
STEERING ANGLE SENSOR DEVICE FOR MOTOR VEHICLES
DISPOSITIF CAPTEUR D'ANGLES DE BRAQUAGE POUR VEHICULES A MOTEUR

(30) Priorität: 10.03.1995 DE 19508607
(43) Veröffentlichungstag der Anmeldung: 29.12.1997
(73) Patentinhaber: Leopold Kostal GmbH & Co. KG, 58513 Lüdenscheid (DE)
(72) Erfinder: WIGGENHAGEN, Frank, D-58509 Lüdenscheid (DE)
(74) Vertreter: Spalthoff, Adolf, Dipl.-Ing.
(86) Internationale Anmeldenummer: EP9600856
(87) Internationale Veröffentlichungsnummer: WO9628335

(56) Entgegenhaltungen:
- DE-A- 3 908 854
- DE-A- 4 142 457

## Beschreibung

Die Erfindung bezieht sich auf eine Lenkwinkel-Sensoreinrichtung für Kraftfahrzeuge, mit einem Lenkwinkel-Sensorelement, mittels dem die Winkelposition eines Kraftfahrzeug-Lenkrads in bezug auf eine volle Lenkradumdrehung (360 Grad) erfaßbar ist, und mit einer Zähleinrichtung, über die die Anzahl und die Richtung der Nulldurchgänge des Lenkrads ermittelbar sind.

Eine derartige Lenkwinkel-Sensoreinrichtung arbeitet im Normalfall auf optischer Grundlage und dient zur Erfassung der momentanen Winkelposition des Lenkrades. Die aktuelle Winkelposition wird nach ihrer Erfassung als serielle Information an ein weiteres angeschlossenes Steuergerät ausgegeben.

Die als serielle Information übertragene Winkelposition bzw. der entsprechend übertragene Winkel ist ein Absolutwert, der zwischen +/-720 Grad liegt. Zu der übertragenen Information gehört das Vorzeichen des Absolutwertes, ein möglicher Codefehler und der Initialisierungszustand. Meist ist das Lenkrad nicht über den gesamten erfaßbaren Winkelbereich, sondern nur zwischen etwa +/-540 Grad drehbar.

Der übertragene Absolutwert setzt sich rechnerisch aus zwei Informationen zusammen.
- Aus einem umgerechneten Winkelwert aus neun Lichtschranken, die den exakten Winkel innerhalb einer ganzen Lenkradumdrehung von 0 bis 360 Grad darstellen, wobei der Auflösungsgrad 2,5 Grad beträgt;
- aus einem Zählerwert, der das Umdrehungssegment kennzeichnet, indem das Lenkrad bewegt wird. Hierbei existieren vier Umdrehungssegmente, die den erfaßbaren Bereich zwischen -720 Grad und +720 Grad abdecken, wobei das erste Umdrehungssegment von 0 bis 360 Grad, das zweite Umdrehungssegment von 362,5 Grad bis 720 Grad, das dritte Umdrehungssegment von -2,5 Grad bis -360 Grad und das vierte Umdrehungssegment von -362,5 Grad bis -720 Grad reicht, wobei das zweite und das vierte Umdrehungssegment vom Lenkrad nicht voll durchlaufen werden können.

Der Winkelwert ist aufgrund der Verwendung einer Codierscheibe eindeutig; die Segmentzuordnung ist aus dem Zählerwert abgeleitet. Der Zählerwert wird immer dann verändert, wenn ein Nulldurchgang des Lenkrades stattfindet.

Zur korrekten Angabe der Lenkradposition ist es somit wesentlich, daß der Zählerwert auf keinen Fall verlorengeht. Des weiteren muß bei der Inbetriebsetzung der Lenkwinkel-Sensoreinrichtung durch Anlegen derselben an die Betriebsspannung des Kraftfahrzeugs eine Initialisierung der Lenkwinkel-Sensoreinrichtung vorgenommen werden, da ansonsten der Zählerwert auf einen Vorzugswert eingestellt würde, der durchaus nicht dem gerade aktuellen Wert entspricht.

Die Lenkwinkel-Sensoreinrichtung wird initialisiert, indem der Fahrer das Lenkrad vom rechten Anschlag zum linken Anschlag oder vom linken Anschlag zum rechten Anschlag dreht, wobei sich hierbei drei Nulldurchgänge des Lenkrads nacheinander ergeben. Erst danach ist die Umdrehungssegmentzuordnung eindeutig festgelegt; der Status der Initialisierung wird gesetzt und der ausgegebene Lenkwinkelwert kann von den angeschlossenen Steuergeräten als gültig verarbeitet werden.

Der Zustand der Initialisierung der Lenkwinkel-Sensoreinrichtung kann im praktischen Betrieb des Kraftfahrzeuges nun auf verschiedene Weisen zwangsrückgesetzt werden.
- Durch das Auftreten eines Codierfehlers, wobei die eingelesenen Lichtschrankensignale nichtplausible Werte einnehmen, was auf mechanische Toleranzen der Kontaktspirale bzw. der Codierspur zur optischen Lenkwinkel-Sensoreinrichtung oder durch den Einfluß einer elektrischen Störspannung, z.B. von EMV-Einstrahlung, auftreten kann;
- durch das Auftreten einer Unterspannung im Bordnetz des Kraftfahrzeuges, woraus in der optischen Lenkwinkel-Sensoreinrichtung ein RESET-Vorgang resultiert.

Nach einer Aufhebung bzw. Zwangsrücksetzung der Initialisierung der optischen Lenkwinkel-Sensoreinrichtung wird der eingetretene nichtinitialisierte Zustand der Kombination aus der optischen Lenkwinkel-Sensoreinrichtung und dem angeschlossenen Steuergerät dem Führer des Kraftfahrzeuges mittels einer im Armaturenbrett vorgesehenen Kontrolleuchte angezeigt. Diese Kontrolleuchte erlischt erst dann, wenn der Führer des Kraftfahrzeugs eine vollständige Neu-Initialisierung durchführt, d.h., wenn der Führer des Kraftfahrzeugs erneut das Lenkrad aus dessen linker Grenzstellung in dessen rechte Grenzstellung verbringt oder umgekehrt, wobei sich dann jeweils die drei Nulldurchgänge des Lenkrads ergeben, die eine korrekte Zuordnung der Umdrehungssegmente zulassen. Eine derartige vollständige Neu-Initialisierung der optischen Lenkwinkel-Sensoreinrichtung ist vergleichsweise aufwendig, wobei fraglich ist, ob ein derartiger Vorgang dem Führer eines Kraftfahrzeugs jeweils zugemutet werden sollte.

Der Erfindung liegt die Aufgabe zugrunde, die gattungsgemäße Lenkwinkel-Sensoreinrichtung für ein Kraftfahrzeug derart weiterzubilden, daß vom Führer des Kraftfahrzeugs durchzuführende Neu-Initialisierungen bei einer Aufhebung bzw. einer Zwangsrücksetzung des Zählerwerks sich erübrigen.

Diese Aufgabe wird erfindungsgemäß durch eine Initialisierungseinrichtung gelöst, die sich aus einer die Laufstellung der von dem Lenkrad beeinflußten, auf beiden Seiten des Kraftfahrzeugs befindlichen Laufräder des Kraftfahrzeugs aus repräsentativen, von dafür vorgesehenen Sensorelementen erfaßten fahrdynamischen Größen angenähert ableitenden, ein entsprechendes Signal liefernden Erfassungseinrichtung, einer das von der Erfassungseinrichtung hervorgerufene Signal mit dem von dem Lenkwinkel-Sensorelement gelieferten, der aktuellen Winkelposition des Lenkrades entsprechenden Signal in Beziehung setzende Vergleichseinrichtung und einer bei Übereinstimmung der beiden Signale die Zähleinrichtung initialisierenden Setzeinrichtung zusammensetzt. Zwecks externer Neu-Initialisierung wird somit die aktuelle Laufstellung der Laufräder des Kraftfahrzeugs erfaßt. Dieser aktuellen Laufstellung entspricht exakt eine Winkelposition des Lenkrads zwischen der linken und der rechten Grenzstellung. Es ist somit möglich, den unterschiedlichen Laufstellungen der Laufräder die Umdrehungssegmente des Lenkrades zuzuordnen. Hierdurch kann der in der Zählereinheit zu setzende Zählerwert in Abhängigkeit von dem Umdrehungssegment, welches sich aufgrund der tatsächlichen aktuellen Laufstellung der Laufräder des Kraftfahrzeugs ermitteln läßt, gesetzt werden bzw. entsprechend korrigiert werden. Die Neu-Initialisierung der optischen Lenkwinkel-Sensoreinrichtung nebst dazugehörigem Steuergerät wird somit ohne aktives Mitwirken des Führers des Kraftfahrzeugs durchgeführt.

In konstruktiv einfacher Weise läßt sich die Initialisierungseinrichtung verwirklichen, wenn die Erfassungseinrichtung, die Vergleichseinrichtung und die Setzeinrichtung in einem externen Steuergerät zusammengefaßt sind.

Zur exakten Ermittlung der Laufstellung der Laufräder des Kraftfahrzeugs ist es vorteilhaft, wenn die Erfassungseinrichtung an Sensorelemente zur Messung der Radgeschwindigkeit und der Drehwinkelgeschwindigkeit des Fahrzeugs angeschlossen ist, wobei derartige Sensorelemente ohnehin am Kraftfahrzeug vorgesehen sind, sofern dieses mit einer Antiblockiervorrichtung oder einer Antischlupfvorrichtung ausgerüstet ist.

Ein mit relativ geringem konstruktiv-technischem und schaltungstechnischem Aufwand zu verwirklichender Anschluß der externen Initialisierungseinrichtung an die Lenkwinkel-Sensoreinrichtung kann verwirklicht werden, wenn die das Lenkwinkel-Sensorelement und die Zähleinheit aufweisende Einheit der Lenkwinkel-Sensoreinrichtung mittels einer zu angeschlossenen Steuereinrichtungen führenden seriellen Schnittstelle an die externe Initialisierungseinrichtung angeschlossen ist.

Eine derartige Vorgehensweise ist insbesondere dann vorteilhaft, wenn die das Lenkwinkel-Sensorelement und die Zählereinheit aufweisende Einheit eine Sicherheitsüberwachungseinrichtung mit einer Haupt- und einer Zusatzeinheit aufweist, die jeweils an einen Rückleseeingang angeschlossen sind, wobei die Rückleseeingänge auch als Eingangsleitungen für Signale von der externen Initialisierungseinrichtung dienen.

Wenn die Erfassungseinrichtung der Initialisierungsanordnung bzw. -einrichtung so ausgestaltet ist, daß sie zur Durchführung einer Initialisierung eine Geradeauslaufstellung der Laufräder des Kraftfahrzeugs erfaßt, kann der schaltungs- und programmtechnische Aufwand für die Erfassungseinrichtung der Initialisierungsanordnung erheblich reduziert werden.

Bei einem erfindungsgemäßen Verfahren zur Initialisierung einer Lenkwinkel-Sensoreinrichtung eines Kraftfahrzeugs, in deren Betrieb die Winkelposition eines Lenkrads in bezug auf eine volle Lenkradumdrehung und die Anzahl und die Richtungen der Nulldurchgänge des Lenkrads mittels einer Zähleinheit erfaßt werden, wird die aktuelle Laufstellung von Laufrädern des Kraftfahrzeugs erfaßt, die erfaßte aktuelle Laufstellung der Laufräder mit der erfaßten aktuellen Winkelposition des Lenkrads verglichen und die Zähleinheit, sofern die erfaßte aktuelle Laufstellung der Laufräder der erfaßten aktuellen Winkelposition des Lenkrads zugeordnet werden kann, entsprechend der erfaßten aktuellen Laufstellung der Laufräder des Kraftfahrzeugs initialisiert.

Zur Erfassung der Laufstellung der Laufräder dienen zweckmäßigerweise die Radgeschwindigkeit und die Drehwinkelgeschwindigkeit des Kraftfahrzeugs.

Besonders zuverlässig läßt sich die externe Initialisierung durchführen, wenn der Initialisierungsvorgang dann durchgeführt wird, wenn sich die Laufräder des Kraftfahrzeugs in Geradeauslaufstellung befinden, wobei die Zähleinheit auf einem Wert initialisiert bzw., falls erforderlich, auf einen Wert gestellt und initialisiert wird, der dem mittleren Nulldurchgang des Lenkrads entspricht, indem die Laufräder exakt in Längsrichtung des Kraftfahrzeugs ausgerichtet sind.

Aus Sicherheitsgründen ist es vorteilhaft, wenn das Verfahren zur Neu-Initialisierung der Lenkwinkel-Sensoreinrichtung nach deren Einschalten nur einmal erfolgen kann.

Bei der Durchführung eines Initialisierungsvorgangs ist es zweckmäßig, wenn bei Beginn der externen Initialisierung seitens des externen Steuergeräts ein 20ms-Impuls ausgegeben wird.

Vorteilhaft wird seitens der eigentlichen Lenkwinkel-Sensoreinrichtung dieser 20ms-Impuls als Auftakt für einen Initialisierungsvorgang anerkannt, wenn dieser Impuls 20ms +/-2ms dauert.

Die Anerkennung des 20ms-Impulses als Signal zur Einleitung eines Initialisierungsvorgangs durch die eigentliche Lenkwinkel-Sensoreinrichtung wird innerhalb des externen Steuergeräts registriert, woraufhin ein Quittierungsimpuls von 20ms ausgegeben wird, sofern die Anerkennung des ersten 20ms-Impulses innerhalb eines vorgebbaren, korrekten zeitlichen Toleranzfensters erfolgt ist.

Der zulässige Zeitraum für den Eingang des Quittierungsimpulses sollte 500ms und die zulässige Impulsdauer 20ms +/-2ms betragen. Werden diese Bedingungen nicht eingehalten, wird angezeigt, daß die Lenkwinkel-Sensoreinrichtung sich nicht im initialisierten Status befindet.

Im folgenden wird die Erfindung an Hand einer Ausführungsform unter Bezugnahme auf die Zeichnung näher erläutert.

Es zeigen:
- Figur 1: eine prinzipielle Darstellung einer erfindungsgemäßen optischen Lenkwinkel-Sensoreinrichtung im Zusammenwirken mit einem externen Steuergerät; und
- Figur 2: die in Figur 1 dargestellte optische Lenkwinkel-Sensoreinrichtung.

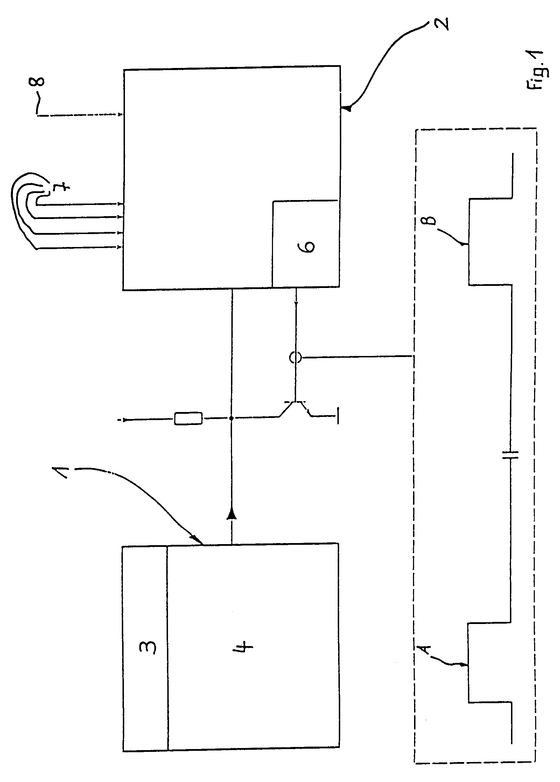

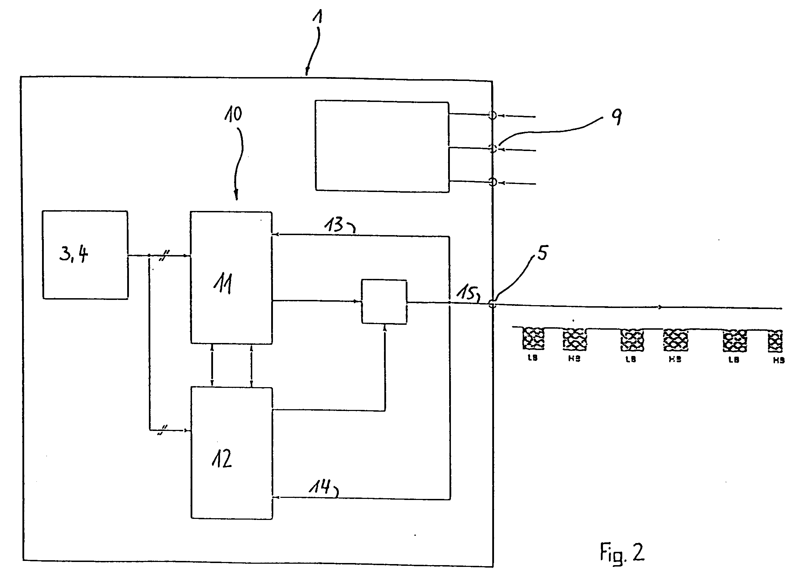

Eine in den Figuren 1 und 2 dargestellte optische Lenkwinkel-Sensoreinrichtung dient zur Erfassung der momentanen Winkelposition eines Kraftfahrzeug-Lenkrades. Um die momentane Winkelposition des Lenkrades bei anderen Steuerungsvorgängen zu berücksichtigen, wird ein der momentanen Winkelposition des Lenkrades entsprechendes Signal als serielle Information aus der Lenkwinkel-Sensoreinrichtung 1 aus und in ein an die Lenkwinkel-Sensoreinrichtung 1 angeschlossenes weiteres Steuergerät 2 eingegeben.

Die momentane Winkelposition des Lenkrades bewegt sich zwischen der rechten Extrem- bzw. Grenzstellung und der linken Extrem- bzw. Grenzstellung, wobei eine Bewegung über diese beiden Extremstellungen hinaus mittels Anschlägen verhindert wird. Ausgehend von einer Mittelstellung des Lenkrads, die dann eingenommen wird, wenn die Laufräder des Kraftfahrzeugs bzw. der gelenkten Achse des Kraftfahrzeugs exakt in Längsrichtung des Kraftfahrzeugs ausgerichtet sind, ist das Lenkrad sowohl nach rechts als auch nach links um jeweils etwa 1,5 Umdrehungen bewegbar. Daraus ergibt sich zwangsläufig, daß die momentane Winkelstellung des Lenkrads etwa zwischen +540 Grad und -540 Grad variieren kann. Die Lenkwinkel-Sensoreinrichtung bzw. das Lenkwinkel-Sensorelement 3 ist so ausgelegt, daß sie bzw. es einen Winkelbereich zwischen +720 Grad und -720 Grad erfassen kann.

Zwischen der rechten Extremstellung und der linken Extremstellung des Lenkrads muß das Lenkrad etwa dreimal um 360 Grad gedreht werden. Aufgrund des erfaßbaren Winkelbereichs des Lenkwinkel-Sensorelements 3 ist der gesamte Bewegungsbereich des Lenkrads in vier Umdrehungssegmente unterteilt, wobei das erste Umdrehungssegment den Bereich zwischen 0 Grad und 360 Grad, das zweite Umdrehungssegment den Bereich zwischen 362,5 Grad und 720 Grad, das dritte Umdrehungssegment den Bereich zwischen -2,5 Grad und -360 Grad und das vierte Umdrehungssegment den Bereich zwischen -362,5 Grad und -720 Grad umfaßt, wobei das zweite und das vierte Umdrehungssegment bei einer Drehung des Lenkrads nicht vollständig ausgenutzt werden können. Der als serielle Information ausgegebene Absolutwert für die aktuelle Winkelposition des Lenkrads umfaßt demgemäß zunächst einen umgerechneten Winkelwert, der sich aus neun Lichtschranken ergibt, die den exakten Winkel innerhalb einer gesamten Umdrehung von 0 bis 360 Grad darstellen, wobei hierbei eine Auflösung von 2,5 Grad vorliegt. Mit diesem Wert ist die Position bzw. die Winkelposition des Lenkrads ermittelbar. Aus diesem Wert allein ist jedoch noch nicht erkennbar, ob sich das Lenkrad im ersten, zweiten, dritten oder vierten Umdrehungssegment befindet. Deshalb muß zur Ermittlung des die momentane Winkelposition des Lenkrads angebenden Absolutwerts noch ein Zählerwert berücksichtigt werden, aus dem hervorgeht, in welchem Umdrehungssegment sich das Lenkrad aktuell befindet.

Im Gegensatz zu dem Winkelwert, der aufgrund der Verwendung einer Codierscheibe eindeutig ist, muß der das aktuelle Umdrehungssegment kennzeichnende Zählerwert abgeleitet werden. Eine Änderung des Zählerwerts ergibt sich immer dann, wenn das Lenkrad einen Nulldurchgang durchführt, d.h., wenn das Lenkrad aus dem ersten in das zweite, aus dem zweiten in das dritte, aus dem dritten in das vierte Umdrehungssegment oder umgekehrt gerät. Zur korrekten Bezeichnung der aktuellen Winkelposition des Lenkrades muß somit sichergestellt werden, daß der gespeicherte Zählerwert jeweils demjenigen Umdrehungssegment entspricht, in welchem sich das Lenkrad tatsächlich aktuell befindet.

Aus dem Vorstehenden ergibt sich, daß der Zählerwert auf keinen Fall verlorengehen darf. Des weiteren muß die optische Lenkwinkel-Sensoreinrichtung 1 bei ihrer Inbetriebnahme, d.h. bei ihrem ersten Anlegen an die Betriebsspannung des Kraftfahrzeugs, initialisiert werden.

Eine bisher bekannte Methode zur Durchführung dieser Initialisierung ist wie folgt.

Der Fahrer dreht das Lenkrad von der linken Extremstellung zur rechten Extremstellung oder umgekehrt, so daß sich während dieser Drehbewegung des Lenkrads drei Nulldurchgänge desselben ergeben. Danach ist die Zuordnung der Umdrehungssegmente eindeutig festgelegt, woraufhin ein Statussignal der Initialisierung gesetzt wird und der ausgegebene Lenkwinkel von den an die Lenkwinkel-Sensoreinrichtung angeschlossenen weiteren Steuergeräten als gültig verarbeitet werden kann.

Zusätzlich zu dieser in herkömmlicher Weise durchführbaren Initialisierung der optischen Lenkwinkel-Sensoreinrichtung ist bei der in Figur 1 dargestellten Ausführungsform der erfindungsgemäßen Lenkwinkel-Sensoreinrichtung eine externe Initialisierung vorgesehen. Um eine derartige externe Initialisierung einwandfrei und zuverlässig gewährleisten zu können, muß das externe Steuergerät 2, welches zur Durchführung der externen Initialisierung ausgerüstet ist und dient, erkennen können, ob das von der erfindungsgemäßen optischen Lenkwinkel-Sensoreinrichtung ausgegebene, der momentanen Winkelposition des Lenkrades entsprechende Signal der tatsächlichen Laufstellung der Räder des Kraftfahrzeugs entspricht und somit plausibel ist.

Diesbezüglich ist festzustellen, daß der von einem Lenkwinkel-Sensorelement 3 der Lenkwinkel-Sensoreinrichtung 1 erfaßte Signal, mittels dem der tatsächliche Winkel des Lenkrads zwischen 0 und 360 Grad erfaßt wird, absolut gemessen wird und demgemäß als ein vergleichsweise sicheres Signal anzusehen ist. Problematisch hierbei ist, daß allein aus der Winkelposition zwischen 0 und 360 Grad nicht festgestellt werden kann, in welchem der vier vorstehend geschilderten Umdrehungssegmente sich das Lenkrad tatsächlich befindet. Da aufgrund der bisher nicht erfolgten Initialisierung in der zur Lenkwinkel-Sensoreinrichtung 1 gehörenden Zähleinheit 4 ein das korrekte Umdrehungssegment kennzeichnender Zählwert noch nicht registriert ist, muß durch Messung anderer Größen bzw. Parameter festgelegt bzw. bestimmt werden, in welchem der vier vorstehend erläuterten Umdrehungssegmente das Lenkrad sich befindet.

Zur Bestimmung dieses Umdrehungssegmentes des Lenkrads dient das über eine serielle Schnittstelle 5 an die Lenkwinkel-Sensoreinrichtung 1 angeschlossene Steuergerät 2, welches eine externe Initialisierungseinrichtung 6 aufweist.

Das Steuergerät 2 ist über Sensorelemente 7, 8 zur Erfassung der Radgeschwindigkeit und der Drehwinkelgeschwindigkeit: des Kraftfahrzeugs in der Lage, die aktuelle Laufstellung der Räder des Kraftfahrzeugs zu erfassen.

Sofern nunmehr ein Geradeauslauf des Fahrzeugs vorliegt, kann das Steuergerät 2 aufgrund seines Anschlusses an die Sensorelemente 7, 8 feststellen, daß die Laufräder des Kraftfahrzeugs in Längsrichtung des Kraftfahrzeugs ausgerichtet sind. Des weiteren ist bei Geradeauslauf des Fahrzeugs das Lenkrad zwangsläufig in seiner mittleren Nullstellung befindlich. Sowohl diese ungefähre Nullstellung des Lenkrades als auch der Geradeauslauf der Laufräder des Kraftfahrzeugs wird im Steuergerät 2 erfaßt, woraufhin das Steuergerät 2 mittels der Initialisierungseinrichtung 6 einen Initialisierungsimpuls abgibt, der durch die serielle Schnittstelle 5 in die Lenkwinkel-Sensoreinrichtung 1 eingegeben wird. Hierdurch wird die Lenkwinkel-Sensoreinrichtung initialisiert; in der Zähleinheit 4 wird registriert, in welchem Umdrehungssegment das Lenkrad sich befindet; von diesem Zeitpunkt an wird jeder Übergang des Lenkrades aus einem Umdrehungssegment in das andere Umdrehungssegment registriert, so daß in der Zähleinheit 4 jeweils festgehalten ist, in welchem Umdrehungssegment das Lenkrad aktuell ist.

Eine externe Initialisierung soll wegen Sicherheitsgründen nur einmal nach jedem Einschalten am Schalter 9 erfolgen.

Die einzige Verbindung der optischen Lenkwinkel-Sensoreinrichtung 1 zur Außenwelt, die zur Initialisierung benutzt werden kann, ist die serielle Schnittstelle 5, über die die optische Lenkwinkel-Sensoreinrichtung 1 an beispielsweise das externe Steuergerät 2 angeschlossen ist. Die optische Lenkwinkel-Sensoreinrichtung 1 hat darüber hinaus eine interne Sicherheitsüberwachungseinrichtung 10, die eine Haupteinheit 11 und eine Zusatzeinheit 12 aufweist. Bezüglich der Schnittstelle 5 sind Rückleseeingänge 13, 14 in die Haupteinheit 11 und die Zusatzeinheit 12 vorhanden.

Diese Rückleseeingänge 13, 14 können nunmehr auch verwendet werden, um fremde, d.h. externe Ereignisse auf der Datenleitung 15 zu detektieren.

Das eigentliche Datensignal in der Datenleitung 15 ist low-aktiv, d.h., in den Übertragungspausen liegt das Potential der Datenleitung 15 auf Bordspannung. Daraus folgt, daß ein nach Masse gezogenes Datensignal von der optischen Lenkwinkel-Sensoreinrichtung 1 auch einwandfrei erkannt werden kann.

Das von der im Steuergerät 2 zugeordneten externen Initialisierungseinrichtung 6 auszugebende Initialisierungssignal besteht nunmehr aus zwei bzw. drei Bestandteilen.

Zur Einleitung der Initialisierung wird ein 20ms-Impuls A ausgegeben, der für diesen Zeitraum die serielle Schnittstelle 5 der Lenkwinkel-Sensoreinrichtung 1 auf Low-Potential legt. Erkennt die optische Lenkwinkel-Sensoreinrichtung 1 diesen 20ms-Impuls A mit einer Toleranz von +/-2ms und sind alle anderen erforderlichen Randbedingungen für eine externe Initialisierung ebenfalls vorhanden, aktiviert die optische Lenkwinkel-Sensoreinrichtung 1 das Statusbit, welches einen initialisierten Zustand der optischen Lenkwinkel-Sensoreinrichtung 1 anzeigt; sofern erforderlich, wird in der das Umdrehungssegment registrierenden Zähleinheit 4 das den Geradeauslauf umfassende Umdrehungssegment eingestellt.

Diese Reaktion der optischen Lenkwinkel-Sensoreinrichtung 1 wird vom Steuergerät 2 registriert; wenn das die Initialisierung kennzeichnende Statusbit im richtigen zeitlichen Toleranzfenster gesetzt wurde, gibt das Steuergerät 2 einen zweiten Quittierungsimpuls, der ebenfalls 20ms dauert, aus.

Der Empfang dieses Quittierungsimpulses muß in der optischen Lenkwinkel-Sensoreinrichtung 1 innerhalb von 500ms nach Eingang des die Initialisierung einleitenden 20ms-Impulses erfolgen. Die zeitliche Länge des zweiten Impulses B wird von der optischen Lenkwinkel-Sensoreinrichtung 1 ebenfalls mit einer Toleranz von +/-2ms überprüft.

Wird nun die Zeitdauer zwischen dem die Initialisierung einleitenden 20ms-Impuls A und dem Quittierungsimpuls B zu groß, d.h. übersteigt sie beispielsweise 500ms, oder beträgt die zeitliche Länge des Quittierungsimpulses B nicht 20ms +/-2ms, wird ein Fehler in der externen Initialisierungssequenz erkannt. Als Folge dieses Fehlers wird das einen initialisierten Zustand der Lenkwinkel-Sensoreinrichtung 1 anzeigende Statusbit wieder gelöscht und ggf. die Zähleinheit 4 wieder auf den ursprünglichen Wert zurückgesetzt.

Eine weitere Initialisierung mittels der externen Initialisierungseinrichtung 6 ist erst dann wieder möglich, wenn vorher der Schalter 9 einmal aus-/eingeschaltet wurde. Eine mechanische Initialisierung durch Drehung des Lenkrades zwischen der rechten und der linken Extremstellung ist jedoch jederzeit zulässig.

Zur Erzielung einer externen Initialisierung muß somit die zeitliche Länge sowohl des die Initialisierung einleitenden 20ms-Impulses A als auch des Quittierungsimpulses B eingehalten werden; darüber hinaus muß der zeitliche Abstand zwischen den beiden genannten Impulsen innerhalb des zulässigen Toleranzfensters von 500ms liegen.

## Patentansprüche

1. Lenkwinkel-Sensoreinrichtung für Kraftfahrzeuge, mit einem Lenkwinkel-Sensorelement (3), mittels dem die aktuelle Winkelposition eines Lenkrades in bezug auf eine volle Lenkradumdrehung (360 Grad) erfaßbar ist und ein entsprechendes Signal lieferbar ist, einer Erfassungseinrichtung, mittels der die aktuelle Laufstellung vom Lenkrad beeinflußter, auf beiden Seiten des Kraftfahrzeugs befindlicher Laufräder aus repräsentativen, von dafür vorgesehenen Sensorelementen erfaßten fahrdynamischen Größen angenähert ableitbar und ein entsprechendes Signal lieferbar ist, und einer Vergleichseinrichtung, mittels der das von der Erfassungseinrichtung gelieferte Signal mit dem vom Lenkwinkel-Sensorelement gelieferten Signal in Beziehung setzbar ist, gekennzeichnet durch eine Zähleinheit (4), mittels der die Anzahl und die Richtung der Nulldurchgänge des Lenkrads ermittelbar sind, und eine Setzeinrichtung, die mit der Erfassungseinrichtung und der Vergleichseinrichtung eine Initialisierungsanordnung (6) bildet und mittels der bei einer von der Vergleichseinrichtung festgestellten Übereinstimmung des vom Lenkwinkel-Sensorelement (3) gelieferten, der Winkelposition des Lenkrads entsprechenden Signals mit dem von der Erfassungseinrichtung gelieferten, der Laufstellung der Laufräder entsprechenden Signal die Zähleinheit (4) initialisierbar ist.

2. Lenkwinkel-Sensoreinrichtung nach Anspruch 1, bei der die Erfassungseinrichtung, die Vergleichseinrichtung und die Setzeinrichtung in einem externen Steuergerät (2) zusammengefaßt sind.

3. Lenkwinkel-Sensoreinrichtung nach einem der Ansprüche 1 oder 2, bei der die Erfassungseinrichtung an Sensorelemente (7, 8) zur Messung der Radgeschwindigkeit und der Drehwinkelgeschwindigkeit des Kraftfahrzeugs angeschlossen ist.

4. Lenkwinkel-Sensoreinrichtung nach einem der Ansprüche 1 bis 3, bei der die das Lenkwinkel-Sensorelement (3) und die Zähleinheit (4) aufweisende Einheit der Lenkwinkel-Sensoreinrichtung (1) mittels einer zu angeschlossenen Steuereinrichtungen (2) führenden seriellen Schnittstelle (5) an die externe Initialisierungseinrichtung (6) angeschlossen ist.

5. Lenkwinkel-Sensoreinrichtung nach Anspruch 4, bei der die das Lenkwinkel-Sensorelement (3) und die Zähleinheit (4) aufweisende Einheit eine Sicherheitsüberwachungseinrichtung (10) mit einer Haupt- (11) und einer Zusatzeinheit (12) aufweist, die jeweils an einen Rückleseeingang (13, 14) angeschlossen sind, wobei die Rückleseeingänge (13, 14) auch als Eingangsleitungen für Signale von der externen Initialisierungseinrichtung (6) dienen.

6. Lenkwinkel-Sensoreinrichtung nach einem der Ansprüche 1 bis 5, bei der die Erfassungseinrichtung so ausgebildet ist, daß sie zur Durchführung einer Initialisierung eine Geradeauslaufstellung der Laufräder des Kraftfahrzeugs erfaßt.

7. Verfahren zur Erfassung des Lenkwinkels von Kraftfahrzeugen, bei dem die aktuelle Winkelposition eines Lenkrads in bezug auf eine volle Lenkradumdrehung (360 Grad) erfaßt und ein entsprechendes Signal erzeugt wird, die aktuelle Laufstellung vom Lenkrad beeinflußter, auf beiden Seiten des Kraftfahrzeugs befindlicher Laufräder des Kraftfahrzeugs aus repräsentativen fahrdynamischen Größen angenähert abgeleitet und ein entsprechendes Signal erzeugt wird, und das der Winkelposition des Lenkrads entsprechende Signal mit dem der Laufstellung der Laufräder entsprechenden Signal in Beziehung gesetzt wird, dadurch gekennzeichnet, daß die Anzahl und die Richtung der Nulldurchgänge des Lenkrads mittels einer Zähleinheit erfaßt werden, die ihrerseits initialisiert wird, wenn eine Übereinstimmung zwischen dem der Winkelposition des Lenkrads entsprechenden Signal und dem der Laufstellung der Laufräder entsprechenden Signal festgestellt wird.

8. Verfahren nach Anspruch 7, bei dem zur Erfassung der Laufstellung der Laufräder die Radgeschwindigkeit und die Drehwinkelgeschwindigkeit des Kraftfahrzeugs erfaßt werden.

9. Verfahren nach Anspruch 7 oder 8, das durchgeführt wird, wenn sich die Laufräder im Geradeauslauf befinden, wobei die Zähleinheit (4) auf einen Wert initialisiert bzw., falls erforderlich, auf einen Wert gestellt und initialisiert wird, der dem mittleren Nulldurchgang des Lenkrads entspricht.

10. Verfahren nach einem der Ansprüche 7 bis 9, das nach dem Einschalten der Lenkwinkel-Sensoreinrichtung (1) durch Umlegen eines Schalters (9) jeweils nur einmal erfolgt.

11. Verfahren nach einem der Ansprüche 7 bis 10, bei dem zur Initialisierung ein 20ms-Impuls (A) ausgegeben wird.

12. Verfahren nach Anspruch 11, bei dem der 20ms-Impuls (A) anerkannt wird, wenn er 20ms +/-2ms dauert.

13. Verfahren nach Anspruch 12, bei dem die Anerkennung des 20ms-Impulses (A) extern registriert und von extern ein Quittierungsimpuls (B) von 20ms Länge ausgegeben wird, wenn die Anerkennung innerhalb eines richtigen zeitlichen Toleranzfensters erfolgt ist.

14. Verfahren nach Anspruch 13, bei dem der zulässige Zeitraum für den Eingang des Quittierungsimpulses 500ms und die zulässige Impulsdauer des Quittierungsimpulses (B) 20ms +/-2ms betragen.

## Claims

1. Steering angle sensing device for motor vehicles, comprising: a steering angle sensor element (3) by means of which the current angular position of a steering wheel can be detected in relation to one full turn of the steering wheel (360 degrees) and a corresponding signal can be supplied; a detecting device by means of which an approximation of the current position on the road of wheels located on both sides of the motor vehicle and affected by the steering wheel can be derived from representative vehicle dynamics variables detected by sensor elements provided for that purpose and a corresponding signal can be supplied; and a comparator device by means of which the signal supplied by the detecting device can be related to the signal supplied by the steering angle sensor element, characterised by a counting unit (4) by means of which the number and the direction of the steering wheel crossovers can be ascertained, and an initialising device which together with the detecting device and the comparator device constitutes an initialisation arrangement (6) and by means of which the counting unit (4) can be initialised in the event that the comparator device finds that the signal supplied by the steering wheel sensor element (3) and corresponding to the angular position of the steering wheel coincides with the signal supplied by the detecting device and corresponding to the position of the wheels on the road.

2. Steering angle sensing device as claimed in claim 1, wherein the detecting device, the comparator device and the initialising device are combined in an external control unit (2).

3. Steering angle sensing device as claimed in either of claims 1 or 2, wherein the detecting device is linked to sensor elements (7, 8) for measuring the wheel speed and the turn angle velocity of the motor vehicle.

4. Steering angle sensing device as claimed in any of claims 1 to 3, wherein the steering angle sensing device unit (1) incorporating the steering angle sensor element (3) and the counting unit (4) is connected to the external initialisation device (6) by means of a serial interface (5) leading to connected control devices (2).

5. Steering angle sensing device as claimed in claim 4, wherein the unit incorporating the steering angle sensor element (3) and the counting unit (4) features a safety monitoring device (10) having a main unit (11) and an auxiliary unit (12), each connected to a respective read-back input (13, 14), and the read-back inputs (13, 14) also serving as input lines for signals from the external initialisation device (6).

6. Steering angle sensing device as claimed in any of claims 1 to 5, wherein the detecting device is configured in such a way that in order to perform an initialisation operation it detects when the road wheels of the motor vehicle are in the straight-ahead position.

7. Method for detecting the steering angle of motor vehicles, wherein the current angular position of a steering wheel is detected in relation to one full turn of the steering wheel (360 degrees) and a corresponding signal is generated, an approximation of the current position on the road of wheels of the motor vehicle located on both sides of the motor vehicle and affected by the steering wheel is derived from representative variables of vehicle dynamics and a corresponding signal is generated, and the signal corresponding to the angular position of the steering wheel is related to the signal corresponding to the position of the wheels on the road, characterised in that the number and the direction of the steering wheel crossovers are detected by means of a counting unit which in its turn is initialised whenever the signal corresponding to the angular position of the steering wheel is found to coincide with the signal corresponding to the position of the wheels on the road.

8. Method as claimed in Claim 7, wherein in order to detect the position of the wheels on the road the wheel speed and the turn angle of the motor vehicle are detected.

9. Method as claimed in claim 7 or 8, which is carried out whenever the road wheels are in the straight-ahead position, the counting unit (4) being initialised at a value or, if necessary, set and initialised at a value that corresponds to the mean steering wheel crossover.

10. Method as claimed in any of claims 7 to 9, which is only carried out once after each occasion that the steering angle sensing device (1) is switched on by throwing a switch (9).

11. Method as claimed in any of claims 7 to 10, wherein a 20 ms pulse (A) is output for initialisation.

12. Method as claimed in claim 11, wherein the 20 ms pulse (A) is recognised if it lasts for 20 ms +/- 2 ms.

13. Method as claimed in claim 12, wherein the recognition of the 20 ms pulse (A) is registered externally and from externally an acknowledgement pulse (B) of 20 ms duration is output once recognition has taken place within a correct chronological window of tolerance.

14. Method as claimed in claim 13, wherein the permissible period of time for inputting the acknowledgement pulse is 500 ms and the permissible pulse duration of the acknowledgement pulse (B) is 20 ms +/- 2 ms.

## Revendications

1. Dispositif de mesure d'angle de braquage destiné à des véhicules automobiles, comprenant un capteur d'angle de braquage (3) à l'aide duquel on mesure la position angulaire d'un volant par rapport à un tour complet de volant (360°) et on génère un signal correspondant, un dispositif de mesure à l'aide duquel on dérive de manière approchée l'orientation actuelle de roues commandées par le volant, situées de chaque côté du véhicule, à partir de grandeurs représentatives sur le plan de la dynamique de roulement, mesurées par des capteurs prévus à cet effet, et on génère un signal correspondant, et un dispositif comparateur à l'aide duquel on met le signal délivré par le dispositif de mesure en relation avec le signal délivré par le capteur d'angle de braquage, caractérisé par une unité de comptage (4) à l'aide de laquelle on compte le nombre et la direction des passages par zéro du volant et par un dispositif de mise à zéro qui, avec le dispositif de mesure et le dispositif comparateur, forme un dispositif d'initialisation (6) et à l'aide duquel l'unité de comptage (4) peut être initialisée lorsque le dispositif comparateur constate une concordance entre le signal correspondant à la position angulaire du volant délivré par le capteur d'angle de braquage (3) et le signal correspondant à l'orientation des roues délivré par le dispositif de mesure.

2. Dispositif de mesure d'angle de braquage selon la revendication 1, dans lequel le dispositif de mesure, le dispositif comparateur et le dispositif de mise à zéro sont regroupés dans un appareil de commande externe (2).

3. Dispositif de mesure d'angle de braquage selon la revendication 1 ou 2, dans lequel le dispositif de mesure est connecté à des capteurs (7, 8) pour mesurer la vitesse de roue et la vitesse de braquage du véhicule.

4. Dispositif de mesure d'angle de braquage selon une des revendications 1 à 3, dans lequel l'unité du dispositif de mesure d'angle de braquage (1) comprenant le capteur d'angle de braquage (3) et l'unité de comptage (4) est connectée au dispositif d'initialisation externe (6) par l'intermédiaire d'une interface (5) série menant à des dispositif de commande (2) connectés.

5. Dispositif de mesure d'angle de braquage selon la revendication 4, dans lequel dans lequel l'unité comprenant le capteur d'angle de braquage (3) et l'unité de comptage (4) comporte un dispositif de sécurité (10) avec une unité principale (11) et une unité secondaire (12) qui sont connectées chacune à une entrée de lecture (13 14), les entrées de lecture (13, 14) servant également de lignes d'entrée pour des signaux provenant du dispositif d'initialisation externe (6).

6. Dispositif de mesure d'angle de braquage selon une des revendications 1 à 5, dans lequel le dispositif de mesure est agencé de telle sorte que pour effectuer une initialisation, on mesure une orientation des roues du véhicule pour la conduite rectiligne.

7. Procédé pour mesurer l'angle de braquage de véhicules dans lequel on mesure la position angulaire actuelle d'un volant par rapport à un tour de volant complet (360°) et on génère un signal correspondant, on dérive de manière approchée l'orientation actuelle de roues commandées par le volant situées de chaque côté du véhicule à partir de grandeurs représentatives sur le plan de la dynamique de déplacement et on produit un signal correspondant et on met le signal correspondant à la position angulaire du volant en relation avec le signal correspondant à l'orientation des roues, caractérisé par le fait que l'on mesure le nombre et la direction des passages par zéro du volant à l'aide d'une unité de comptage, laquelle de son côté est initialisée chaque fois qu'une concordance est constatée entre le signal correspondant à la position angulaire du volant et le signal correspondant à l'orientation des roues .

8. Procédé selon la revendication 7, selon lequel pour mesurer l'orientation des roues on mesure la vitesse de roues et la vitesse de braquage du véhicule.

9. Procédé selon la revendication 7 ou 8, qui est mis en oeuvre lorsque les roues se trouvent dans la position de conduite rectiligne, l'unité de comptage (4) étant initialisée à une valeur ou si nécessaire réglée et initialisée à une valeur qui correspond au passage par zéro intermédiaire du volant.

10. Procédé selon une des revendications 7 à 9, qui se déroule seulement une fois après la mise en marche du dispositif de mesure d'angle de braquage (1) par commutation d'un commutateur (9).

11. Procédé selon une des revendications 7 à 10, selon lequel une impulsion de 20 ms (A) est émise pour l'initialisation.

12. Procédé selon la revendication 11, selon lequel l'impulsion de 20 ms (A) est reconnue lorsque sa durée est 20 ms ±2 ms.

13. Procédé selon la revendication 12, selon lequel la reconnaissance de l'impulsion de 20 ms (A) est enregistrée en externe et une impulsion de validation (B) de 20 ms est émise en externe lorsque la reconnaissance a lieu à l'intérieur d'une fenêtre de tolérance temporelle correcte.

14. Procédé selon la revendication 13, selon lequel le laps de temps admissible pour l'entrée de l'impulsion de validation est de 500 ms et la durée d'impulsion de l'impulsion de validation (B) est de 20 ms ±2 ms.
